(19) Europäisches Patentamt
European Patent Office
Office européen des brevets

(11) **EP 2 227 120 B1**

(12) **FASCICULE DE BREVET EUROPEEN**

(45) Date de publication et mention de la délivrance du brevet:
**28.09.2011 Bulletin 2011/39**

(21) Numéro de dépôt: **08872077.6**

(22) Date de dépôt: **25.11.2008**

(51) Int Cl.:
***A47J 31/36*** *(2006.01)*

(86) Numéro de dépôt international:
**PCT/FR2008/001641**

(87) Numéro de publication internationale:
**WO 2009/098392 (13.08.2009 Gazette 2009/33)**

(54) **APPAREIL DE PRODUCTION DE BOISSONS MUNI D'UN DISPOSITIF DE RECONNAISSANCE DE DOSETTES**

VORRICHTUNG ZUR HERSTELLUNG VON GETRÄNKEN MIT EINEM BEHÄLTERERKENNUNGSSYSTEM

APPARATUS FOR PRODUCING BEVERAGES AND PROVIDED WITH A POD RECOGNITION SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.11.2007 FR 0708285**

(43) Date de publication de la demande:
**15.09.2010 Bulletin 2010/37**

(73) Titulaire: **SEB S.A.**
**69130 Ecully (FR)**

(72) Inventeurs:
• **TURPIN, Romain**
**14210 Sainte-Honorine du Fay (FR)**
• **GAILHARD, Thierry**
**69970 Chaponnay (FR)**

(74) Mandataire: **Kiehl, Hubert**
**SEB Développement**
**Les 4 M-Chemin du Petit Bois**
**B.P. 172**
**69134 Ecully Cedex (FR)**

(56) Documents cités:
**WO-A-2007/122144    FR-A- 2 874 164**
**GB-A- 2 403 892**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 2 227 120 B1**

**Description**

La présente invention concerne un appareil de production de boisson par infusion de matière à infuser contenue dans un conditionnement jetable.

La présente invention concerne plus particulièrement un appareil de production de boisson équipé d'un dispositif de reconnaissance de dosettes.

Par dosette, on comprend un conditionnement jetable comportant une enveloppe fermée rigide ou souple, perméable ou imperméable contenant une ou plusieurs matières à infuser.

Un appareil de production de boisson équipé d'un dispositif de reconnaissance de dosettes est généralement adapté à préparer une boisson à partir d'une dosette sélectionnée par un utilisateur dans un éventail de différentes dosettes. L'utilisateur insère la dosette dans l'appareil de production de boisson qui, une fois la dosette reconnue par le dispositif de reconnaissance, va préparer la boisson en injectant habituellement de l'eau dans la dosette dans des conditions optimum de température, quantité, pression et débit prédéfinis pour la dosette choisie. De tels appareils peuvent préparer différentes boissons du type café, thé, chocolat ou des boissons froides aromatisées.

Pour être facilement identifiables par l'utilisateur et par l'appareil de production de boisson, les dosettes comportent généralement une zone colorée sur leur enveloppe qui caractérise le contenu de la dosette. Ainsi par exemple, la couleur marron correspond à un café, la couleur jaune à un thé, etc.

On connaît du document WO 02/28241 de telles dosettes comportant un code d'identification pouvant être lu par un appareil de production de boisson. Le code d'identification peut être caractérisé par une couleur prédéterminée, un contour spécifique de la dosette ou un code barre. Ces deux derniers cas présentent l'inconvénient de ne pas être identifiables facilement par l'utilisateur et de nécessiter une mise en position précise de la dosette lors de l'identification du code d'identification par l'appareil de production de boisson.

On connaît également du document FR 2874164 un appareil de production de boisson équipé d'un dispositif de reconnaissance de la dosette basé sur la reconnaissance d'une couleur. Cependant face à la multiplication des préparations possibles imposant un grand nombre de couleurs différentes, le dispositif de reconnaissance peut faire des erreurs d'identification, certaines couleurs ayant des caractéristiques trop proches. Une erreur d'indentification entraîne évidemment une préparation de boisson manquée.

Pour répondre à la multiplication des préparations possibles, dans certains cas, des dosettes comportent un deuxième code couleur pour indiquer à l'utilisateur pour un contenu particulier quel type de préparation est réalisable : par exemple pour du café, la préparation d'un café expresso, d'un café long, etc.

Ce double code couleur peut être utilisé pour réaliser une boisson nécessitant plusieurs dosettes différentes. Par exemple, pour réaliser un chocolat au lait, il faut une dosette de chocolat et une dosette de lait. Les deux dosettes comportent une couleur commune pour identifier la préparation et une couleur pour identifier le contenu.

Le but de la présente invention est de proposer un dispositif de reconnaissance d'une dosette comprenant une enveloppe comportant au moins deux zones colorées d'identification qui présente une grande fiabilité, un fonctionnement sûr, qui soit simple et très économique à mettre en oeuvre.

Un autre but de l'invention est de proposer un appareil de production de boissons par infusion de matières à infuser contenues dans au moins une dosette, comprenant un dispositif de reconnaissance de chaque dosette qui permet de réaliser automatiquement la boisson après introduction de la ou les dosettes dans le dispositif.

Ces buts sont atteints avec un dispositif de reconnaissance d'une dosette contenant des ingrédients pour préparer différents types de boissons, ladite dosette comprenant une enveloppe comportant au moins deux zones colorées d'identification, caractérisé en ce que le dispositif de reconnaissance comporte des moyens de détection de la couleur des deux zones colorées d'identification de la dosette et en ce que l'identification de la dosette est effectuée en détectant la couleur de chacune des deux zones colorées d'identification.

Par zone d'identification colorée, on entend une zone de couleur non nécessairement uniforme mais identifiable par les moyens de détection.

De manière avantageuse, les deux zones colorées seront formées par deux zones annulaires autour d'un axe de révolution de la dosette, disposées soit sur une face, soit sur un côté ou une combinaison des deux pour permettre une reconnaissance des deux couleurs sans avoir à positionner angulairement la dosette dans le dispositif de reconnaissance. Dans une variante de réalisation, les deux zones colorées peuvent être de forme quelconque et imposer une mise en position angulaire de la dosette.

La détection de la couleur de chacune des deux zones colorées d'identification de la dosette permet d'obtenir une grande fiabilité dans l'identification de la dosette. De plus, le dispositif de reconnaissance peut détecter une mauvaise lecture des couleurs si la combinaison de couleurs identifiée ne correspond à aucune préparation mémorisée et informer l'utilisateur à l'aide d'une interface.

Avantageusement, l'une des deux zones colorées d'identification de la dosette caractérise le type de préparation et l'autre caractérise le type de matière contenu dans la dosette.

De préférence, les moyens de détection comportent un sous ensemble de détection par zone colorée d'iden-

2

tification comprenant chacun un ou plusieurs composants d'émission d'une lumière vers la zone colorée d'identification et un composant d'acquisition apte à capter la couleur de la zone colorée éclairée.

Cette disposition permet de réaliser la détection d'une couleur à l'aide d'un petit sous ensemble compact.

Avantageusement, les moyens de détection comportent au moins un composant d'émission d'une lumière vers chaque zone colorée d'identification et un seul composant d'acquisition apte à capter successivement la couleur de chaque zone colorée d'identification éclairée.

Cette disposition permet de réaliser la détection de deux couleurs de manière très économique en utilisant un seul composant d'acquisition.

De préférence, le composant d'acquisition génère trois signaux électriques proportionnels aux trois couleurs primaires rouge, vert et bleu de la couleur en cours de détection et le dispositif de reconnaissance comporte un calculateur qui convertit les trois signaux électriques dans un système de valeurs correspondant à la teinte H, la luminance L et la saturation S.

Cette disposition permet de réaliser la détection d'une couleur de manière très fiable.

Avantageusement, le dispositif de reconnaissance comporte une mémoire contenant des valeurs de teinte Hi, de luminance Li, de saturation Si de i couleurs référencées et le calculateur calcule successivement la distance Di entre au moins une valeur de teinte H, de luminance L, de saturation S de la couleur en cours de détection et la même valeur de teinte Hi, de luminance Li et de saturation Si des i couleurs référencées ; la couleur en cours de détection étant associée à la couleur pour laquelle Di est le plus petit.

L'invention concerne également un appareil de production de boissons par infusion de matières à infuser contenues dans des dosettes, comportant au moins un réceptacle apte à recevoir une dosette, caractérisé en ce qu'il comprend pour chaque dosette un dispositif de reconnaissance selon l'invention.

La détection des deux couleurs de chacune des dosettes permet à l'appareil de production de boisson de reconnaître la préparation, le contenu et la position dans les réceptacles de chaque dosette et, ainsi de pouvoir réaliser automatiquement la boisson à partir de paramètres d'injection de l'eau mémorisés.

L'invention concerne également un appareil de production de boissons par infusion de matières à infuser contenues dans des dosettes comprenant chacune au moins deux zones d'identifications colorées, ledit appareil comportant au moins deux réceptacles aptes à recevoir chacun une dosette, caractérisé en ce que ledit appareil comprend pour l'ensemble des dosettes un dispositif de reconnaissance selon l'invention et en ce que ledit dispositif de reconnaissance comporte des moyens de détection comprenant au moins un composant d'émission d'une lumière vers chaque zone colorée d'identification et un seul composant d'acquisition apte à capter successivement la couleur de chaque zone colorée d'identification éclairée.

Ce mode de réalisation permet de réaliser un appareil de production de boisson encore plus économique en utilisant un dispositif de reconnaissance de quatre couleurs muni d'un seul capteur d'acquisition.

Avantageusement, le composant d'acquisition génère trois signaux électriques proportionnels aux trois couleurs primaires rouge, vert et bleu de la couleur en cours de détection et le dispositif de reconnaissance comporte un calculateur qui convertit les trois signaux électriques dans un système de valeurs correspondant à la teinte H, la luminance L et la saturation S.

De préférence, le dispositif de reconnaissance comporte une mémoire contenant des valeurs de teinte Hi, de luminance Li, de saturation Si de i couleurs référencées, et le calculateur calcule successivement la distance Di entre au moins une valeur de teinte H, de luminance L, de saturation S de la couleur en cours de détection et la même valeur de teinte Hi, de luminance Li et de saturation Si des i couleurs référencées ; la couleur en cours de détection étant associée à la couleur pour laquelle Di est le plus petit.

L'invention concerne également l'utilisation d'une dosette comportant deux zones colorées d'identification dans un appareil selon l'invention.

Avantageusement, la dosette comporte un axe de révolution et chaque zone colorée d'identification de la dosette comporte au moins une surface de révolution par rapport audit axe.

Cette disposition permet un positionnement très facile de la dosette dans l'appareil de production de boisson.

L'invention sera mieux comprise à l'étude des modes de réalisation pris à titre nullement limitatif et illustrés dans les figures annexées dans lesquelles :

- La figure 1 illustre une vue en perspective d'un appareil de production de boissons selon un mode particulier de réalisation de l'invention.
- La figure 2 illustre une vue en perspective du dessous de l'appareil de production de boissons de la figure 1.
- La figure 3 est une vue schématique d'un premier mode de réalisation d'un dispositif de reconnaissance de deux dosettes de l'appareil de production de boissons de la figure 1.
- La figure 4 est une vue schématique en coupe d'un sous ensemble de détection d'une couleur de l'appareil de production de boissons de la figure 1.
- La figure 5 est une vue schématique d'un deuxième mode de réalisation d'un dispositif de reconnaissance de deux dosettes de l'appareil de production de boissons de la figure 1.

- La figure 6 est une vue schématique d'un troisième mode de réalisation d'un dispositif de reconnaissance de deux dosettes de l'appareil de production de boissons de la figure 1.

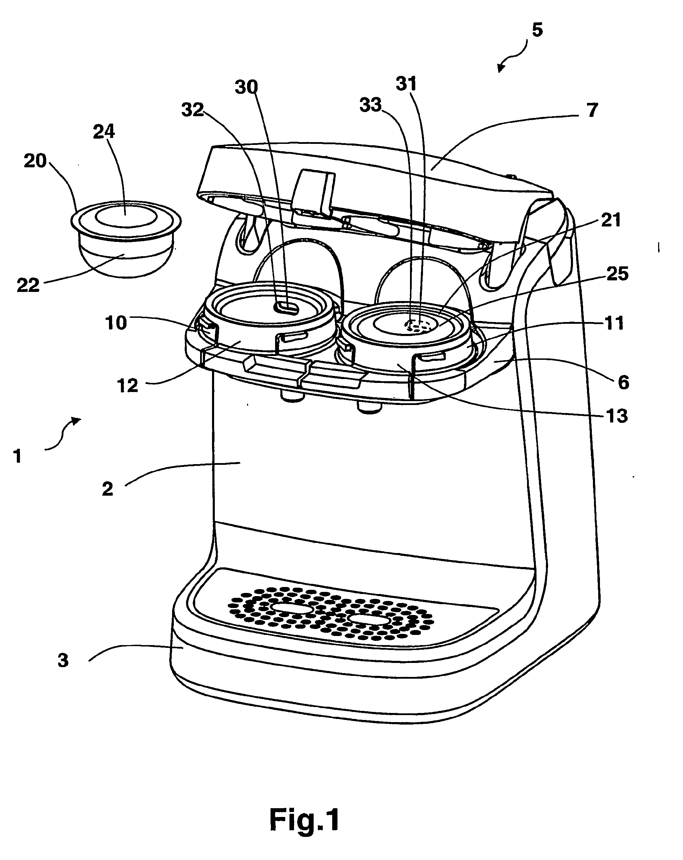

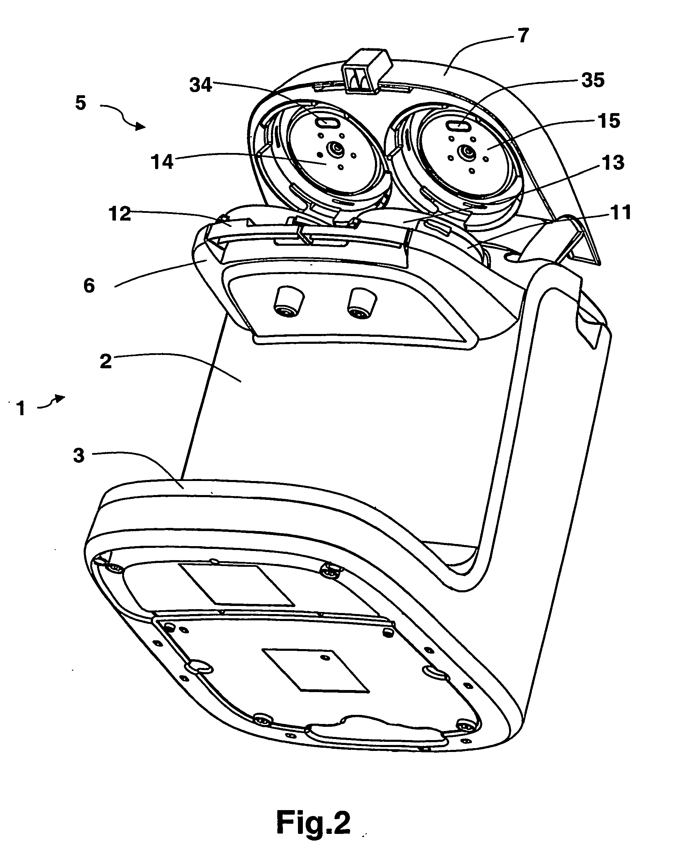

Les figures 1 et 2 représentent un appareil domestique de production de boissons 1 du type café, thé, chocolat ou des boissons froides ou chaudes aromatisées selon l'invention. Cet appareil comporte un boîtier 2 sur lequel est agencé un pied 3 porte tasse et une tête d'infusion 5 à double logement permettant de recevoir deux dosettes 20, 21. La tête d'infusion 5 comporte une mâchoire fixe 6 comprenant deux réceptacles 10, 11 recevant deux porte-dosettes 12, 13 et une mâchoire mobile en rotation 7 munie de deux disques de tassage 14, 15.

Les porte-dosettes 12, 13 sont amovibles pour permettre à l'utilisateur de mettre en place ou d'ôter facilement la ou les dosettes 20, 21. Dans une variante de réalisation, les deux porte-dosettes peuvent être regroupés en une seule pièce.

La dosette 20, 21 comporte une capsule colorée 22, 23 de forme cylindrique contenant la ou les matières à infuser et un opercule 24, 25 également coloré fermant la capsule 22, 23. La capsule colorée et l'opercule coloré forment deux zones colorées d'identification 22, 23, 24, 25. La couleur de l'opercule, par exemple, définit la préparation et la couleur de la capsule définit le type de matière contenu dans la dosette. Les matières de la capsule et de l'opercule sont opaques.

A l'intérieur du boîtier (non visible sur les figures) sont disposés de manière connue en soi, un réservoir d'eau, un bloc thermique qui renferme un circuit d'eau et un élément chauffant électrique pour assurer l'alimentation en eau chaude de la tête d'infusion et un circuit électronique de commande.

Le boîtier présente dans sa partie supérieure (non visible sur les figures) une façade comprenant un panneau de commande agissant sur le circuit électronique de commande et informant l'utilisateur sur l'état de l'appareil.

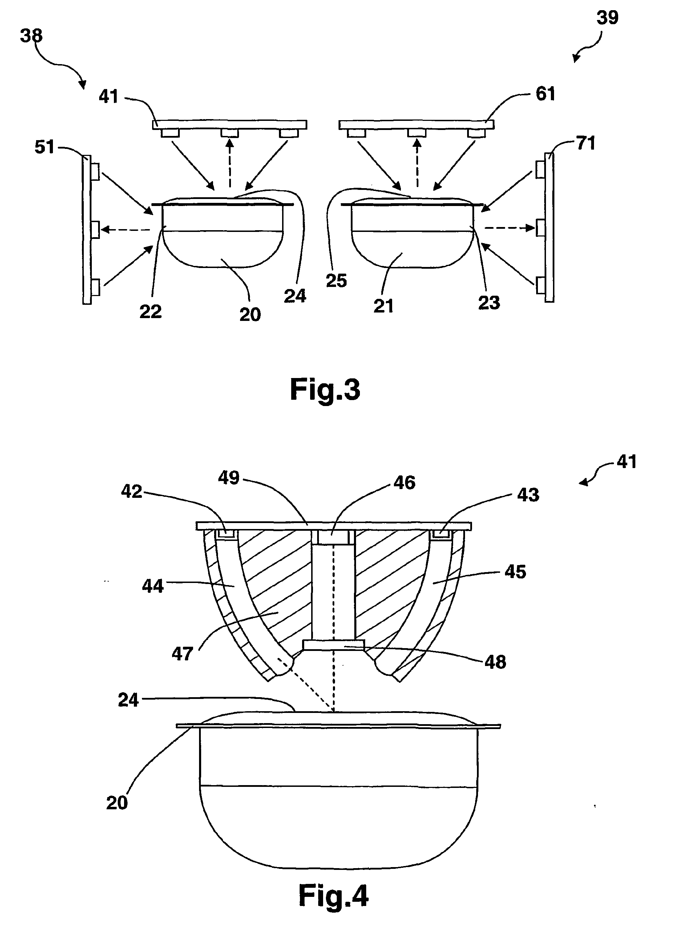

Le circuit électronique de commande reçoit des informations d'un dispositif de reconnaissance des dosettes comportant des moyens de détection 38, 39 illustrés par la figure 3. Les moyens de détection 38 sont aptes à capter la couleur de l'opercule 24 à l'aide d'un sous ensemble de détection 41 et de la capsule 22 à l'aide d'un sous ensemble de détection 51 pour la dosette 20. Les moyens de détection 39 sont aptes à capter la couleur de l'opercule 25 à l'aide d'un sous ensemble de détection 61 et la couleur de la capsule 23 à l'aide d'un sous ensemble de détection 71 pour la dosette 21.

La figure 4 illustre le sous ensemble 41 qui comprend deux composants d'émission 42, 43 d'une lumière blanche du type LED (Light-Emetting Diode) dirigée vers l'opercule coloré 24 par deux guides optiques 44, 45 et un composant d'acquisition 46 du type capteur couleur comportant trois photo diodes aptes à capter la couleur de l'opercule 24 au travers d'une lentille de protection 48. Un socle 47 réalisé dans une matière opaque de couleur noire supporte les guides optiques 44, 45 et la lentille 48. Les guides optiques 44, 45 dirigent la lumière suivant un angle de 45° par rapport à la surface de l'opercule 24 pour éclairer la surface. Cet angle de 45° permet de ne pas réfléchir la lumière vers le capteur couleur 46 placé perpendiculairement à la surface de l'opercule 24. Pour une bonne lecture, le capteur couleur, doit viser une zone éclairée sans être soumis à un rayonnement réfléchi de la lumière d'éclairage. Les LEDs 42, 43, le capteur couleur 46 et le socle 47 sont agencés sur un circuit imprimé 49.

Les sous ensembles 61, 51, 71 ont une construction identique à celle du sous ensemble 41.

Les sous ensembles de détection 41, 61 de la couleur des opercules 24, 25 sont agencés dans la mâchoire mobile 7 (fig 2), derrière les disques de tassage 14, 15 qui comportent des ouvertures 34, 35 permettant le passage de la lumière émise par les LEDs et l'acquisition de la couleur par le capteur couleur. Les sous ensembles de détection 51, 71 de la couleur des capsules 22, 23 sont agencés dans la mâchoire fixe 6 (fig 1), derrière les réceptacles 10, 11 et les porte dosettes 12,13 qui comportent chacun une ouverture 30, 31, 32, 33.

Pour capter la couleur de la zone d'identification éclairée, les trois photos diodes génèrent trois signaux électriques proportionnels aux trois couleurs primaires rouge, vert et bleu vers le circuit de commande. Ce dernier comporte un calculateur et une mémoire. Le calculateur convertit les trois signaux électriques dans un système de valeurs teinte $H_m$, luminance $L_m$ et saturation $S_m$ et positionne ces trois valeurs dans un système à trois coordonnées $H_m$, $L_m$, $S_m$.

Dans un premier mode de réalisation de l'invention, le calculateur calcule la distance $D_i$ entre les coordonnées $H_m$, $L_m$, $S_m$ et chaque coordonnée $H_i$, $L_i$, $S_i$ pour les i couleurs référencées dans la mémoire, du type racine carrée de la somme des carrés des différences de coordonnées :

$$D_i = \sqrt{(H_m - H_i)^2 + (L_m - L_i)^2 + (S_m - S_i)^2}$$ ; la couleur en cours de détection étant associée à la couleur en mémoire pour laquelle $D_i$ est la plus petite.

Dans une variante préférentielle de réalisation de l'invention, le calculateur calcule la distance entre une des coordonnées $H_m$, $L_m$ ou $S_m$ et chaque coordonnée du même type $H_i$, $L_i$ ou $S_i$ pour les i couleurs référencées dans la mémoire, du type :

EP 2 227 120 B1

$$Di = \sqrt{\alpha(Hm - Hi)^2 + \beta(Lm - Li)^2 + \delta(Sm - Si)^2}$$ où $\alpha$, $\beta$ et $\delta$ sont des coefficients de pondération.

Ainsi, si on a des couleurs d'opercules qui varient fortement suivant la coordonnée teinte H, le calculateur effectue un calcul de distance avec les coefficients $\alpha=1$ et $\beta=\delta =0$. De la même façon, si on a des couleurs d'opercules qui varient fortement suivant la coordonnée luminance L, le calculateur effectue un calcul de distance avec les coefficients $\beta=1$ et $\alpha=\delta =0$. La coordonnée choisie peut également être différente suivant la zone d'identification, par exemple la teinte H pour l'opercule et la luminance L pour la capsule.

La couleur en cours de détection est associée à la couleur en mémoire pour laquelle Di est le plus petit.

Avantageusement, la détection d'une couleur peut être réalisée de manière séquentielle. Le calculateur effectue successivement un calcul de distance sur chaque coordonnée H, L, S.

Dans une première étape, le calculateur effectue un calcul de distance $Di_H$ sur la teinte

$$H : Di_H = \sqrt{(Hm - Hi)^2}$$ . La mémoire comporte une distance Da correspondant aux incertitudes de lectures du dispositif de détection. Le calculateur retient les couleurs i dont le calcul de distance $Di_H$ est tel que :

-Da $<Di_H <$ Da.

Si le calculateur a retenu plus d'une couleur, dans une deuxième étape, il effectue un calcul de distance $Di_L$

sur la luminance $L : Di_L = \sqrt{(Lm - Li)^2}$ pour les couleurs i sélectionnées précédemment. Le calculateur retient les couleurs i dont le calcul de distance $Di_L$ est tel que :

-Da $<Di_L <$ Da.

Si le calculateur a retenu encore plus d'une couleur, dans une troisième étape, il effectue un calcul de distance sur la saturation S pour ne retenir qu'une seule couleur.

Si le calculateur ne retient aucune couleur i lors de la détection d'une couleur, il envoie un message de non reconnaissance vers le panneau de commande.

En fonctionnement, l'utilisateur remplit le réservoir d'eau et place une tasse sur le pied 3 de l'appareil de production de boisson 1. Il ouvre la mâchoire supérieure 7 de la tête d'infusion 5, retire un porte dosette 12 pour y placer une dosette 20 puis repositionne le porte dosette 12 dans la tête d'infusion 5. Si nécessaire, il renouvelle l'opération pour une deuxième dosette 21 en fonction de la préparation souhaitée.

On remarquera que la dosette prévue pour être utilisée dans l'appareil selon l'invention comporte des zones d'identification qui peuvent être un ou plusieurs anneaux sur la capsule et, ou une ou plusieurs couronnes sur l'opercule. De ce fait l'utilisateur n'a pas à se soucier du positionnement angulaire de la dosette dans le porte dosette ; ce qui lui évite de réfléchir et de faire un mouvement du poignet inutile.

Il referme ensuite la mâchoire supérieure 7 et lance un cycle de préparation de boisson à l'aide du panneau de commande. Les moyens de détection 38, 39 identifient la présence d'une ou deux dosettes 20, 21 et reconnaissent les couleurs de chaque opercule 24, 25 et de chaque capsule 22, 23. Le circuit de commande adapte alors les paramètres d'infusion au type de préparation reconnue et réalise la boisson. Les paramètres possibles sont le volume d'eau injecté, la température de l'eau, la pression de l'eau, le débit de l'eau. L'utilisateur peut évacuer la ou les dosettes utilisées de la même manière que pour leur mise en place.

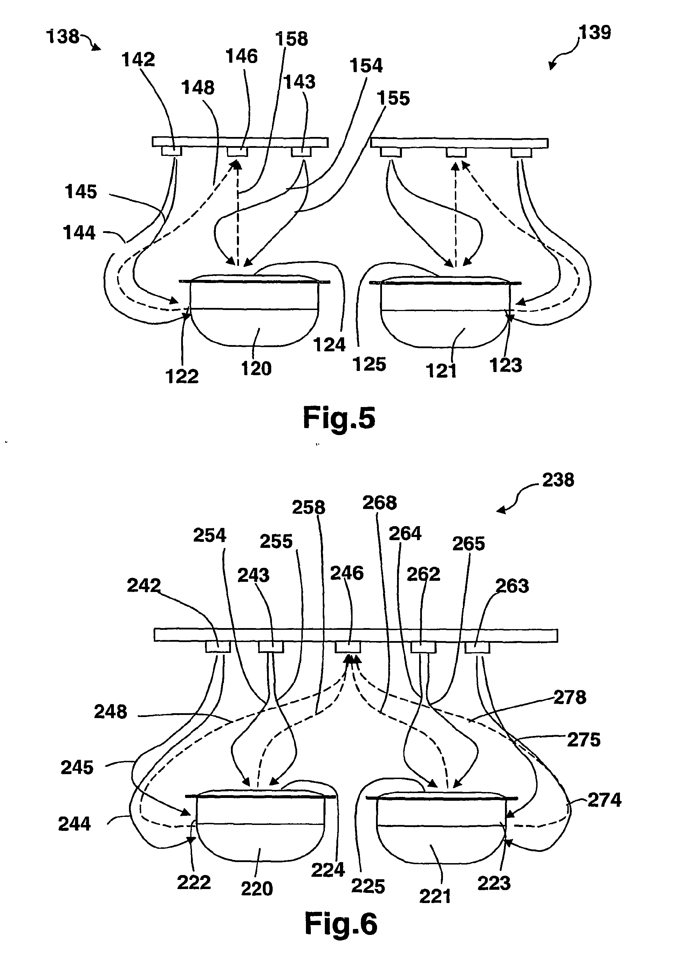

La figure 5 illustre schématiquement un dispositif de reconnaissance de dosettes selon un autre mode de réalisation de l'invention. Ce dispositif comporte des moyens de détection 138, 139. Les moyens de détection 138 sont aptes à capter la couleur d'un opercule 124 et la couleur d'une capsule 122 appartenant à une dosette 120. Les moyens de détection 139 sont aptes à capter la couleur d'un opercule 125 et la couleur d'une capsule 123 appartenant à une dosette 121.

Les moyens de détection 138 comportent deux LEDs 142, 143 émettant successivement chacune une lumière dirigée vers les zones colorées d'identification 122, 124 par deux fibres optiques 144, 145, 154, 155 et un seul composant d'acquisition 146 apte à capter successivement les couleurs des zones colorées d'identification éclairées au moyen d'une fibre optique 148, 158. Les moyens de détection 139 ont une construction identique aux moyens de détection 138. Les fibres optiques permettent de déporter le sous ensemble de détection par rapport aux ouvertures du disque de tassage, du réceptacle et du porte dosette.

La figure 6 illustre également schématiquement un dispositif de reconnaissance de dosettes selon un autre mode de réalisation de l'invention. Ce dispositif comporte des moyens de détection 238 aptes à capter la couleur d'un opercule 224 et la couleur d'une capsule 222 appartenant à une dosette 220 et également la couleur d'un opercule 225 et la couleur d'une capsule 223 appartenant à une dosette 221.

Les moyens de détection 238 comportent quatre LEDs 242, 243, 262, 263 émettant successivement chacune une lumière dirigée vers les zones colorées d'identification 222, 224, 225, 223 par deux fibres optiques 244, 245, 254, 255, 264, 265, 274, 275 et un seul capteur couleur 246 apte à capter successivement les couleurs des zones colorées d'identification éclairées au moyen d'une fibre optique 248, 258, 268, 278. Les fibres optiques permettent de déporter les moyens de détection par rapport aux ouvertures des disques de tassage, des réceptacles et des portes dosettes.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, les deux zones colorées d'identification de la dosette peuvent être disposées toutes deux sur une même face de la dosette, sur l'opercule ou la capsule.

Dans une variante de réalisation, les moyens de détection de la couleur analysent une zone bicolore constituée par l'ensemble des deux zones colorées d'identification. Les deux zones colorées d'identification peuvent être côte à côte ou imbriquées pour former la zone bicolore. Cette zone bicolore reste facilement interprétable par l'utilisateur.

Dans une autre variante de réalisation, une zone colorée d'identification de la dosette peut être constituée par une zone transparente de l'enveloppe laissant apparaître la couleur du contenu.

Dans une autre variante de réalisation, les dosettes peuvent prendre une forme quelconque et nécessiter une mise en position dans le dispositif de reconnaissance.

A titre de variante, le dispositif de reconnaissance peut être déporté de la tête d'infusion de l'appareil de production de boisson et être placé dans une rampe d'amenée des dosettes introduites une à une par l'utilisateur.

**Revendications**

1. Dispositif de reconnaissance d'une dosette (20, 21, 120, 121) contenant des ingrédients pour préparer différents types de boissons, ladite dosette comprenant une enveloppe comportant au moins deux zones colorées d'identification (22, 23, 24, 25, 122, 123, 124, 125) et le dispositif de reconnaissance comportant des moyens de détection (38, 39, 138, 139, 238) de la couleur des deux zones colorées d'identification de la dosette **caractérisé en ce que** l'identification de la dosette (20, 21, 120, 121) est effectuée en détectant la couleur de chacune des deux zones colorées d'identification.

2. Dispositif de reconnaissance selon la revendication 1, **caractérisé en ce que** l'une des deux zones colorées d'identification (22, 23, 24, 25, 122, 123, 124, 125) de la dosette caractérise le type de préparation et l'autre caractérise le type de matière contenu dans la dosette.

3. Dispositif de reconnaissance selon l'une des revendications 1 ou 2, **caractérisé en ce que** les moyens de détection (38, 39) comportent un sous ensemble de détection (41, 51, 61, 71) par zone colorée d'identification comprenant chacun un ou plusieurs composants d'émission (42, 43) d'une lumière vers la zone colorée d'identification et un composant d'acquisition (46) apte à capter la couleur de la zone colorée éclairée.

4. Dispositif de reconnaissance selon l'une des revendications 1 ou 2, **caractérisé en ce que** les moyens de détection (138, 139) comportent au moins un composant d'émission (142, 143) d'une lumière vers chaque zone colorée d'identification et un seul composant d'acquisition (146) apte à capter successivement la couleur de chaque zone colorée d'identification éclairée.

5. Dispositif de reconnaissance selon l'une quelconque des revendications 1 à 4, **caractérisé en ce que** le composant d'acquisition (46, 146) génère trois signaux électriques proportionnels aux trois couleurs primaires rouge, vert et bleu de la couleur en cours de détection et **en ce que** le dispositif comporte un calculateur qui convertit les trois signaux électriques dans un système de valeurs correspondant à la teinte H, la luminance L et la saturation S.

6. Dispositif de reconnaissance selon l'une quelconque des revendications 1 à 5, **caractérisé en ce que** le dispositif comporte une mémoire contenant des valeurs de teinte Hi, de luminance Li, de saturation Si de i couleurs référencées, et **en ce que** le calculateur calcule successivement la distance Di entre au moins une valeur de teinte H, de luminance L, de saturation S de la couleur en cours de détection et la même valeur de teinte Hi, de luminance Li et de saturation Si des i couleurs référencées ; la couleur en cours de détection étant associée à la couleur pour laquelle Di est le plus petit.

7. Appareil de production de boissons (1) par infusion de matières à infuser contenues dans des dosettes (20, 21, 120, 121), comportant au moins un réceptacle (10, 11) apte à recevoir une dosette (20, 21, 120, 121), **caractérisé en ce qu'**il comprend pour chaque dosette un dispositif de reconnaissance selon l'une quelconque des revendications 1 à 6, qui permet de réaliser automatiquement la boisson après introduction de la ou les dosettes dans le dispositif.

8. Appareil de production de boissons par infusion de matières à infuser contenues dans des dosettes (220, 221) comprenant chacune au moins deux zones d'identifications colorées (222, 224, 223, 225), ledit appareil comportant au moins deux réceptacles aptes à recevoir chacun une dosette, **caractérisé en ce que** ledit appareil comprend pour l'ensemble des dosettes un dispositif de reconnaissance selon la revendication 1 et **en ce que** ledit dispositif de reconnaissance comporte des moyens de détection (238) comprenant au moins un composant d'émission (242, 243, 262, 263) d'une lumière vers chaque zone colorée d'identification (222, 224, 223, 225) et un seul composant d'acquisition (246) apte à capter successivement la couleur de chaque zone colorée d'identification éclairée (222, 224, 223, 225).

9. Appareil de production de boissons selon la revendication 8, **caractérisé en ce que** le composant d'acquisition (246) génère trois signaux électriques proportionnels aux trois couleurs primaires rouge, vert et bleu de la couleur en cours de détection et **en ce que** le dispositif comporte un calculateur qui convertit les trois signaux électriques dans un système de valeurs correspondant à la teinte H, la luminance L et la saturation S.

10. Appareil de production de boissons selon l'une quelconque des revendications 8 à 9, **caractérisé en ce que** le dispositif comporte une mémoire contenant des valeurs de teinte Hi, de luminance Li, de saturation Si de i couleurs référencées, et **en ce que** le calculateur calcule successivement la distance Di entre au moins une valeur de teinte H, de luminance L, de saturation S de la couleur en cours de détection et la même valeur de teinte Hi, de luminance Li et de saturation Si des i couleurs référencées ; la couleur en cours de détection étant associée à la couleur pour laquelle Di est le plus petit.

11. Utilisation d'une dosette comportant deux zones colorées d'identification dans un appareil selon l'une quelconque des revendications 7 à 10.

12. Utilisation d'une dosette selon la revendication 11 **caractérisée en ce que** ladite dosette comporte un axe de révolution et **en ce que** chaque zone colorée d'identification de ladite dosette comporte au moins une surface de révolution par rapport audit axe.

## Claims

1. A device for recognising a pod (20, 21, 120, 121) containing ingredients for preparing different types of beverages, said pod including a casing including at least two coloured identification areas (22, 23, 24, 25, 122, 123, 124, 125) and the recognition device including a means for detecting (38, 39, 138, 139, 238) the colour of the two coloured identification areas of the pod, **characterised in that** the pod (20, 21, 120, 121) is identified by detecting the colour of each of the two coloured identification areas.

2. A recognition device according to claim 1, **characterised in that** one of the two coloured identification areas (22, 23, 24, 25, 122, 123, 124, 125) of the pod characterises the type of preparation and the other characterises the type of substance contained in the pod.

3. A recognition device according to one of claims 1 or 2, **characterised in that** the detection means (38, 39) includes a detection sub-assembly (41, 51, 61, 71) per coloured identification area each including one or more light-emitting components (42, 43) that emit light towards the coloured identification area and an acquisition component (46) capable of sensing the colour of the illuminated coloured area.

4. A recognition device according to one of claims 1 or 2, **characterised in that** the detection means (138, 139) includes at least one light-emitting component (142, 143) that emits light towards each coloured identification area and only one acquisition component (146) capable of successively sensing the colour of each illuminated coloured identification area.

5. A recognition device according to any one of claims 1 to 4, **characterised in that** the acquisition component (46, 146) generates three electrical signals proportional to the three primary colours red, green and blue of the colour being detected and **in that** the device includes a calculator which converts the three electrical signals into a value system corresponding to the hue H, luminance L and saturation S.

6. A recognition device according to any one of claims 1 to 5, **characterised in that** the device includes a memory containing values of hue Hi, luminance Li, saturation Si of i referenced colours, and **in that** the calculator successively calculates the distance Di between at least one value of hue H, luminance L and saturation S of the colour being detected and the same value of hue Hi, luminance Li and saturation Si of the i referenced colours; the colour being detected being associated with the colour for which Di is the smallest.

7. An appliance for producing beverages (1) by infusing infusion substances contained in pods (20, 21, 120, 121), including at least one container (10, 11) adapted for receiving the pod (20, 21, 120, 121), **characterised in that** it includes for each pod a recognition device according to any one of claims 1 to 6, which enables to prepare the beverage automatically after the pod(s) are inserted into the device.

8. An appliance for producing beverages by infusing infusion substances in pods (220, 221) each including at least two coloured identification areas (222, 224, 223, 225), said appliance including at least two containers adapted for receiving a pod each, **characterised in that** said appliance includes for all the pods a recognition device according to claim 1 and **in that** said recognition device includes a detection means (238) including at least one light-emitting component (242, 243, 262, 263) that emits light towards each coloured identification area (222, 224, 223, 225) and only one acquisition component (246) capable of successively sensing the colour of each illuminated coloured identification area (222, 224, 223, 225).

9. An appliance for producing beverages according to claim 8, **characterised in that** the acquisition component (246) generates three electrical signals proportional to the three primary colours red, green and blue of the colour being detected and **in that** the device includes a calculator which converts the three electrical signals into a value system corresponding to the hue H, luminance L and saturation S.

10. An appliance for producing beverages according to any one of claims 8 to 9, **characterised in that** the device includes a memory containing values of hue Hi, luminance Li and saturation Si of i referenced colours, and **in that** the calculator successively calculates the distance Di between at least one value of hue H, luminance L and saturation S of the colour being detected and the same value of hue Hi, luminance Li and saturation Si of the i referenced colours; the colour being detected being associated with the colour for which Di is the smallest.

11. Use of a pod including two coloured identification areas in an appliance according to any one of claims 7 to 10.

12. Use of a pod according to claim 11 **characterised in that** said pod includes an axis of revolution and **in that** each coloured identification area of said pod includes at least one revolution surface with respect to said axis.

**Patentansprüche**

1. Vorrichtung zur Erkennung einer dosierten Einzelportion (20, 21, 120, 121), die Inhaltsstoffe enthält, um verschiedene Arten von Getränken zuzubereiten, wobei die dosierte Einzelportion eine Hülle umfasst, die mindestens zwei farbige Identifikationsbereiche (22, 23, 24, 25, 122, 123, 124, 125) aufweist, und die Erkennungsvorrichtung Mittel zur Erfassung (38, 39, 138, 139, 238) der Farbe der zwei farbigen Identifikationsbereiche der dosierten Einzelportion umfasst, **dadurch gekennzeichnet, dass** die Identifikation der dosierten Einzelportion (20, 21, 120, 121) durch Erfassen der Farbe jedes der zwei farbigen Identifikationsbereiche erfolgt.

2. Erkennungsvorrichtung nach Anspruch 1, **dadurch gekennzeichnet, dass** einer der zwei farbigen Identifikationsbereiche (22, 23, 24, 25, 122, 123, 124, 125) der dosierten Einzelportion die Art der Zubereitung und der andere die Art des Inhaltsstoffes kennzeichnet, der in der dosierten Einzelportion enthalten ist.

3. Erkennungsvorrichtung nach einem der Ansprüche 1 oder 2, **dadurch gekennzeichnet, dass** die Mittel zur Erfassung (38, 39) pro farbigen Identifikationsbereich eine Untereinheit zur Erfassung (41, 51, 61, 71) umfassen, die jeweils einen oder mehrere Bauteile für die Aussendung (42, 43) eines Lichts zum farbigen Identifikationsbereich hin und einen Bauteil für den Empfang (46) umfasst, der imstande ist, die Farbe des erleuchteten farbigen Bereichs zu erfassen.

4. Erkennungsvorrichtung nach einem der Ansprüche 1 oder 2, **dadurch gekennzeichnet, dass** die Mittel zur Erfassung (138, 139) mindestens ein Bauteil für die Aussendung (142, 143) eines Lichts zu jedem farbigen Identifikationsbereich hin und ein einziges Bauteil für den Empfang (146) umfassen, das imstande ist, die Farbe jedes erleuchteten farbigen Identifikationsbereichs nacheinander zu erfassen.

**5.** Erkennungsvorrichtung nach einem der Ansprüche 1 bis 4, **dadurch gekennzeichnet, dass** das Bauteil für den Empfang (46, 146) drei elektrische Signale generiert, deren Proportion jener der drei Primärfarben rot, grün und blau jener Farbe, die gerade erfasst wird, entspricht, und dadurch, dass die Vorrichtung einen Rechner umfasst, der die drei elektrischen Signale in ein Wertesystem entsprechend dem Farbton H, der Helligkeit L und der Sättigung S umwandelt.

**6.** Erkennungsvorrichtung nach einem der Ansprüche 1 bis 5, **dadurch gekennzeichnet, dass** die Vorrichtung einen Speicher umfasst, der Farbtonwerte Hi, Helligkeitswerte Li und Sättigungswerte Si von i verzeichneten Farben enthält, und dadurch, dass der Rechner nacheinander die Distanz Di zwischen mindestens einem Farbtonwert H, Helligkeitswert L und Sättigungswert S jener Farbe, die gerade erfasst wird, und dem gleichen Farbtonwert Hi, Helligkeitswert Li und Sättigungswert Si der i verzeichneten Farben berechnet, wobei die Farbe, die gerade erfasst wird, jener Farbe zugeordnet wird, bei der Di am kleinsten ist.

**7.** Gerät zur Herstellung von Getränken (1) mittels Aufbrühung von aufzubrühenden Inhaltsstoffen, die in dosierten Einzelportionen (20, 21, 120, 121) enthalten sind, umfassend mindestens eine Aufnahme (10, 11), die imstande ist, eine dosierte Einzelportion (20, 21, 120, 121) aufzunehmen, **dadurch gekennzeichnet, dass** es für jede dosierte Einzelportion eine Erkennungsvorrichtung nach einem der Ansprüche 1 bis 6 umfasst, die nach Einsetzen der dosierten Einzelportion(en) in die Vorrichtung eine automatische Getränkezubereitung ermöglicht.

**8.** Gerät zur Herstellung von Getränken mittels Aufbrühung von aufzubrühenden Inhaltsstoffen, die in dosierten Einzelportionen (220, 221) enthalten sind, die jeweils mindestens zwei farbige Identifikationsbereiche (222, 224, 223, 225) aufweisen, wobei das Gerät mindestens zwei Aufnahmen umfasst, die imstande sind, jeweils eine dosierte Einzelportion aufzunehmen, **dadurch gekennzeichnet, dass** das Gerät für sämtliche dosierte Einzelportionen eine Erkennungsvorrichtung nach Anspruch 1 umfasst und dadurch, dass die Erkennungsvorrichtung Mittel zur Erfassung (238) umfasst, die mindestens ein Bauteil für die Aussendung (242, 243, 262, 263) eines Lichts zu jedem farbigen Identifikationsbereich (222, 224, 223, 225) hin und ein einziges Bauteil für den Empfang (246) umfassen, das imstande ist, die Farbe jedes erleuchteten farbigen Identifikationsbereichs (222, 224, 223, 225) nacheinander zu erfassen.

**9.** Gerät zur Herstellung von Getränken nach Anspruch 8, **dadurch gekennzeichnet, dass** das Bauteil für den Empfang (246) drei elektrische Signale generiert, deren Proportion jener der drei Primärfarben rot, grün und blau jener Farbe, die gerade erfasst wird, entspricht, und dadurch, dass die Vorrichtung einen Rechner umfasst, der die drei elektrischen Signale in ein Wertesystem entsprechend dem Farbton H, der Helligkeit L und der Sättigung S umwandelt.

**10.** Gerät zur Herstellung von Getränken nach einem der Ansprüche 8 bis 9, **dadurch gekennzeichnet, dass** die Vorrichtung einen Speicher umfasst, der Farbtonwerte Hi, Helligkeitswerte Li und Sättigungswerte Si von i verzeichneten Farben enthält, und dadurch, dass der Rechner nacheinander die Distanz Di zwischen mindestens einem Farbtonwert H, Helligkeitswert L und Sättigungswert S jener Farbe, die gerade erfasst wird, und dem gleichen Farbtonwert Hi, Helligkeitswert Li und Sättigungswert Si der i verzeichneten Farben berechnet, wobei die Farbe, die gerade erfasst wird, jener Farbe zugeordnet wird, bei der Di am kleinsten ist.

**11.** Verwendung einer dosierten Einzelportion mit zwei farbigen Identifikationsbereichen in einem Gerät nach einem der Ansprüche 7 bis 10.

**12.** Verwendung einer dosierten Einzelportion nach Anspruch 11, **dadurch gekennzeichnet, dass** die dosierte Einzelportion eine Rotationsachse umfasst und dadurch, dass jeder farbige Identifikationsbereich der dosierten Einzelportion mindestens eine Rotationsfläche in Bezug auf die Achse aufweist.

**Fig.1**

**Fig.2**

**Fig.3**

**Fig.4**

**Fig.5**

**Fig.6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0228241 A
- FR 2874164